# EUROPÄISCHE PATENTANMELDUNG

(11) **EP 4 674 617 A1**
(43) Veröffentlichungstag der Anmeldung: **07.01.2026**
(21) Anmeldenummer: 24186396.8
(22) Anmeldetag: 03.07.2024
(51) Int. Cl.: B32B 15/00, B32B 15/08, B32B 15/12, B32B 15/20, B32B 23/04, B32B 27/08, B32B 27/10, B32B 27/36

(54) **LIDFOLIE ZUM VERSCHLIESSEN VON GETRÄNKEKAPSELN**

(71) Anmelder: Jura-Plast GmbH, 91244 Reichenschwand (DE)
(72) Erfinder: Müller, Jürgen, 91244 Reichenschwand (DE)
(74) Vertreter: Simandi, Claus

(57) **Zusammenfassung**

Die vorliegende Erfindung betrifft eine Lidfolie zum luftdichten Verschließen von Getränkekapseln, insbesondere Kaffeekapseln, mit hervorragenden Barriereeigenschaften gegen Gaseintritt, Wasser bzw. Luftfeuchtigkeit und Sauerstoff aufweisend:
i.) mindestens eine Schicht eines Papiers,
ii.) mindestens eine Schicht enthaltend Polymilchsäure,
iii.) mindestens eine Schicht einer Metallisierung,
iv.) mindestens eine Siegelschicht enthaltend mindestens einen thermoplastischen Kunststoff, der aus Glukose, Lignin oder Cellulose hergestellt ist.

## Beschreibung

Die vorliegende Erfindung betrifft eine Lidfolie zum luftdichten Verschließen von Getränkekapseln, insbesondere Kaffeekapseln, mit hervorragenden Barriereeigenschaften gegen Gaseintritt, Wasser bzw. Luftfeuchtigkeit und Sauerstoff.

Weit verbreitet sind Kapseln zum portionsweisen Aufbrühen von Getränken wie Kaffee oder Tee. Die Kapseln bestehen aus einem becherartigen Grundkörper und einer Lid- oder Deckelfolie, die den Grundkörper fest verschließt. Die Kapseln sind dafür ausgebildet, mit der Lidfolie in einen entsprechenden Zubereitungsautomaten eingelegt zu werden. Für die Zubereitung wird die Kapsel mit Lidfolie gestochen. In dem Automaten zubereitetes, heißes Wasser wird vorzugsweise mit Druck in die Kapsel gegeben. Das heiße Getränk, z. B. gebrühter Kaffee, kann nun durch die gestochenen Löcher in der Lidfolie ausfließen.

Bekannterweise bestehen die Kapseln, Grundkörper wie Deckelfolie, aus Aluminium um den Inhalt vor Aromaverlusten, z. B. aufgrund von Sauerstoffeintritt, zu schützen. Da Kapseln aus Aluminium nicht kompostierbar sind, fällt eine enorme Menge an Abfall an, der entsorgt werden muss.

Mittlerweile sind auch Kapseln bekannt, die einen Grundkörper und Lidfolie aus einem biologisch abbaubaren Kunststoff oder dergleichen Material haben, wie z.B. WO 2018/202821 A1 der Anmelderin oder biologisch abbaubare Getränkekapseln, wie sie in WO 2015/121489 A1 der Ritter GmbH oder in DE 20 2016 104 950 U1 von Francesco Spignesi beschrieben sind.

Es ist daher Aufgabe der vorliegenden Erfindung eine Lidfolie aus einem abbaubaren, kompostierbaren oder heimkompostierbaren Material bereitzustellen, die zum Verschließen von Behältnissen mit Kapseln geeignet ist, und den Gasstoffeintritt noch besser verhindert.

Erfindungsgemäß ist eine Lidfolie vorgesehen, die aus mehreren Schichten aufgebaut ist, und auf diese Weise eine vollständige Siegelfähigkeit aufweist.

Weiter betrifft die vorliegende Erfindung eine Getränkekapsel mit der erfindungsgemäßen Lidlfolie.

Daher betrifft die Erfindung eine Lidfolie für Getränkekapseln umfassend, von außen nach innen mehrere Schichten,
i.) mindestens eine Schicht eines Papiers,
ii.) mindestens eine Schicht enthaltend Polymilchsäure,
iii.) mindestens eine Schicht einer Metallisierung,
iv.) mindestens eine Siegelschicht enthaltend mindestens einen thermoplastischen Kunststoff, der aus Glukose, Lignin oder Cellulose hergestellt ist.

In einer bevorzugten Ausführungsform können die Schichten zwischen i.) und ii.) und iii.) und iv.) mit mindestens einem Kaschierkleber versehen sein.

In einer bevorzugten Ausführungsform kann die Schicht i.) eine Grammatur von 25 bis 50 g /qm, insbesondere 30 bis 40 g /qm aufweisen und/oder eine Dicke von 25 - 75 µm aufweisen. Papier im Sinne dieser Erfindung ist ein dünnes Material, das im Wesentlichen aus Pflanzenfasern hergestellt wird.

In einer weiteren bevorzugten Ausführungsform kann die Schicht ii.) mindestens ein weiteres aliphatischen-aromatischen Copolyester enthalten, insbesondere Polybutylenadipat-Terephthalat (PBAT) (ecoflex^{®} BASF), der gemäß EN 13432 kompostierbar ist.

Besonders bevorzugt sind solche der BASF mit dem Handelsnamen ecovio ^{®} auf der Basis von Polymilchsäure, welche gemäß EN 13432 kompostierbar sind.

Bevorzugt ist, dass die Schicht ii.) ein maximales Elastizitätsmodul von 100 bis 300 MPa gemäß ISO 527 aufweist. Weiterhin ist bevorzugt, dass die maximale Streckspannung oder Zugspannung 45 MPa, insbesondere 35 bis 40 MPa gemäß ISO 527 beträgt.

Weiterhin ist bevorzugt ein MVR (190 Grad Celsius / 5 kg) von 8-12 cm3/10 min gemäß ISO 1133.

In einer weiteren bevorzugten Ausführungsform kann die Schicht ii.) aus mehreren solchen Schichten bestehen, insbesondere zwei oder drei Schichten, wobei jede Schicht Polymilchsäure enthält, oder zusätzlich mindestens ein weiteres aliphatisches-aromatisches Copolyester enthält.

In der Schicht ii.) können zusätzlich neben Polymilchsäure (PLA) weitere Biopolymere enthalten sein, wie modifizierte Polymilchsäure, Polymilchsäure-Copolymere, Polyhydroxyalkanoate (PHA), Polycaprolacton (PCL).

Beispiele für PLA-Copolymere sind Copolymere mit Polyestern, z. B. aliphatischen Polyestern (CPLA).

Bevorzugt sind biologisch abbaubare Kunststoffe auf Polylactidbasis, wie modifiziertes Polylactid, Polylactid-Copolymere, Alpha-Hydroxysäuren wie z. B. Poly-(Lactid-co-Glykolid) (PLGA), Polyanhydride, aliphatische Polyester, Copolyester mit aliphatischen und aromatischen Blöcken, Polyesteramid, Polyesterurethan, ein Polyethylenoxidpolymer, ein Polyglycol und Copolymere davon.

Die Schicht ii.) kann eine Dicke von 10 - 50 µm aufweisen.

In einer weiteren bevorzugten Ausführungsform kann gemäß Schicht iii.) das Metall ausgewählt sein aus Bor, Aluminium oder Silizium, insbesondere Boroxid, Aluminiumoxid oder Siliziumoxid.

In einer weiteren bevorzugten Ausführungsform kann Schicht iii.) eine Dicke von 20 - 50 nm, insb. 30 - 40 nm aufweisen. Die Metallisierung erfolgt mittels Aufdampfen auf die Schicht ii.).

In einer weiteren bevorzugten Ausführungsform kann Schicht iii.) zusätzlich ein Coating aus Acrylat enthalten.

In einer weiteren bevorzugten Ausführungsform kann das Coating aus Acrylat eine Dicke von 20 - 40 nm zusätzlich auf der der Schicht iii.) aufweisen. Das Coating erlaubt einen vorteilhaften Schutz und Fixierung der Metallisierung in Schicht iii.).

Mindestens ein Acrylat kann ausgewählt sein aus der Gruppe Polyurethan-, Polyester-, Epoxy- und Polyether-acrylate oder -methaacrylate, insbesondere Oligomere, und / oder Monomere ausgewählt aus der Gruppe mono-, di-, tri-, tetra- und hexafunktionelle Acrylate oder Methaacrylate.

Weiterhin ist bevorzugt, dass die Schicht der Metallisierung iii.) - an der Schicht ii.) - ein Gewicht von 0,1 bis 0,15 g/qm aufweist und/oder das Acrylat ein Gewicht von 0,04 bis 0,06 g/qm aufweist.

In einer weiteren bevorzugten Ausführungsform kann die Siegelschicht iv.) mindestens einen thermoplastischen Kunststoff enthalten, der aus Glukose, Lignin oder Cellulose hergestellt ist, der vorzugsweise gemäß EN 13432 kompostierbar ist. Weiterhin kann die Siegelschicht iv.) Biopolymere enthalten, wie nicht abschließend Polyhydroxyalkanoaten (PHA), Polycaprolacton (PCL), Polyester (PET), Stärke, Polymilchsäure (PLA), Polyolefinen (PE), Polyamiden (PA).

Bevorzugt ist, dass die Siegelschicht iv.) ein maximales Elastizitätsmodul von 3000 oder 4000 bis 4500 MPa gemäß ISO 527 aufweist (Messung des Elastizitätsmoduls mit einer Prüfgeschwindigkeit von 1 mm/min). Weiterhin ist bevorzugt, dass die maximale Streckspannung oder Zugspannung von 40 bis 60 MPa, insbesondere 55 oder 54 MPa gemäß ISO 527 beträgt.

Weiterhin ist bevorzugt ein MVR (190 Grad Celsius / 2,16 kg) von 3-5 cm³/10 min gemäß ISO 1133.

In einer Ausführungsform ist bevorzugt, eine Siegelschicht iv.) aus einer Polymermischung, und zwar enthaltend
a.) 70 - 95 Gew. % aus mindestens einem thermoplastischen Kunststoff, der aus Glukose, Lignin oder Cellulose hergestellt ist, aufweisend ein Elastizitätsmodul von 4000 - 4400 MPa und einer Streckspannung oder Zugspannung von 50 - 60 MPa nach ISO 527, und
b.) 5 - 30 Gew. % aus mindestens einem thermoplastischen Kunststoff, der aus Glukose, Lignin oder Cellulose hergestellt ist, aufweisend ein Elastizitätsmodul von 200 - 400 MPa und einer Streckspannung oder Zugspannung von 10 - 20 MPa nach ISO 527

Weiterhin ist bevorzugt, eine Polymermischung von a.) / b.) von 85 Gew % : 15 Gew. %.

Weiterhin ist bevorzugt, dass a.) einen MVR (190 Grad Celsius / 2,16 kg) von 3 cm³/10 min gemäß ISO 1133 aufweist und b.) einen MVR (190 Grad Celsius / 2,16 kg) von 6 cm³/10 min gemäß ISO 1133 aufweist.

Zudem können a.) und b.) Biopolymere enthalten, wie Polyhydroxyalkanoaten (PHA), Polycaprolacton (PCL), Polyester (PET), Stärke, Polymilchsäure (PLA), Polyolefinen (PE), Polyamiden (PA).

Solche Polymermischungen sind bei der Firma Tecnaro, Ilsfeld, Deutschland erhältlich. z.B. Abroblend ^{®}.

Insbesondere die Siegelschicht erlaubt eine vorteilhafte mechanische Festigkeit der Getränkekapsel mit einem optimalen Innendruck.

In einer weiteren bevorzugten Ausführungsform kann die Siegelschicht iv.) aus mehreren solchen Schichten bestehen, insbesondere zwei oder drei Schichten, wobei jede Schicht mindestens einen weiteren thermoplastischen Kunststoff enthält, der aus Glukose, Lignin oder Cellulose hergestellt ist, die gemäß EN 13432 kompostierbar ist.

Die Siegelschicht iv.) kann eine Dicke von 30 - 70 µm aufweisen.

Daher betrifft die Erfindung ebenfalls eine Lidfolie für Getränkekapseln oder eine Getränkekapsel mit einer erfindungsgemäßen Lidfolie, wobei die Getränkekapsel mindestens eine Schicht aus ii.) und / oder iv.) enthält oder aus einer solchen Schicht besteht.

Insgesamt verwirklicht die vorliegende Erfindung eine kompostierbare oder heimkompostierbare Lidfolie samt Getränkekapsel gemäß der Europäischen Norm (EN) 13432.

Die Schicht aus Papier gemäß i.) bildet die nach Außen weisende Schicht der erfindungsgemäßen Lidfolie.

Zum Schutz des Inhalts des Behältnisses weisen die erfindungsgemäßen Schichten in ihrer gewählten Anordnung optimale Barriereeigenschaften für Sauerstoff und Wasserdampf auf und erreichen daher hervorragende Siegeleigenschaften. Die erfindungsgemäßen Barriereschichten weisen eine geeignete Sperrwirkung für Sauerstoff und Wasserdampf auf.

Für die Herstellung der Lidfolie wird die jeweilige Schicht mithilfe eines vorzugsweise biologisch abbaubaren Kaschierklebers laminiert.

Es wird vorzugsweise ein biologisch abbaubarer Kaschierkleber eingesetzt, der lebensmittelverträglich ist. Beispiele sind wässrige Lösungen von Polyvinylalkohol (PVOH), auf Basis von Stärke, Eiweißkleber, oder Polyurethan (Fa. Morchem, München, Deutschland).

Ein weiterer geeigneter biologisch abbaubarer Kaschierkleber ist der wasserbasierte Klebstoff Epotal^{®} Eco der Firma BASF.

Kapseln für Getränke aus biologisch abbaubarem Kunststoff können mittels der in der Kunststofftechnik üblichen Verfahren hergestellt werden, wie z. B. durch Tiefziehen oder im Spritzgussverfahren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können.

Wenn ein Begriff mit einem unbestimmten oder bestimmten Artikel, wie zum Beispiel "ein" im Singular bezeichnet wird, schließt dies auch den Begriff im Plural mit ein und umgekehrt, sofern der Kontext nicht eindeutig anderes festlegt.

Der Ausdruck "umfassen", wie er hier verwendet wird, schließt nicht nur die Bedeutung von "enthalten" ein, sondern kann auch "bestehen(d) aus" und "im Wesentlichen bestehend aus" bedeuten.

Die ISO 527 bestimmt das mechanische Verhalten von Kunststoffen unter Zugbelastung. Diese Norm legt die Prüfmethoden für die Bestimmung der Zug-Eigenschaften von Kunststoffen fest.

Die ISO 1133 beschreibt das Verfahren zur Bestimmung der MVR (Melt Volume Rate, bzw. Schmelzvolumenfließrate) sowie der MFR (Melt Flow Rate, Schmelzfließrate), welche die Masse des durch die Düse extrudierten Kunststoffs in Gramm pro 10 Minuten (g/10 min) angibt. Die MVR gibt an, wie viel Volumen eines Kunststoffes in einem bestimmten Zeitraum unter festgelegten Bedingungen durch eine definierte Düse extrudiert wird. Die MVR wird in Kubikzentimetern pro 10 Minuten (cm³/10 min) angegeben.

## Patentansprüche

1. Lidfolie für Getränkekapseln umfassend,
von außen nach innen mehrere Schichten,
i.) mindestens eine Schicht eines Papiers,
ii.) mindestens eine Schicht enthaltend Polymilchsäure,
iii.) mindestens eine Schicht einer Metallisierung,
iv.) mindestens eine Siegelschicht enthaltend mindestens einen thermoplastischen Kunststoff, der aus Glukose, Lignin oder Cellulose hergestellt ist.

2. Lidfolie für Getränkekapseln nach Anspruch 1 aufweisend,
mindestens einen Kaschierkleber zwischen i.) und ii.) und iii.) und iv.).

3. Lidfolie für Getränkekapseln nach Anspruch 1 oder Anspruch 2, wobei die Schicht ii.) mindestens ein weiteres aliphatisches-aromatisches Copolyester, insbesondere Polybutylenadipat-Terephthalat (PBAT), enthält, der gemäß EN 13432 kompostierbar ist.

4. Lidfolie für Getränkekapseln nach einem der vorhergehenden Ansprüche, wobei die Siegelschicht iv.) mindestens einen weiteren thermoplastischen Kunststoff enthält, der aus Glukose, Lignin oder Cellulose hergestellt ist, der gemäß EN 13432 kompostierbar ist.

5. Lidfolie für Getränkekapseln nach einem der vorhergehenden Ansprüche, wobei die Getränkekapsel mindestens eine Schicht aus ii.) und / oder iv.) enthält oder aus einer solchen Schicht besteht.

6. Lidfolie für Getränkekapseln nach einem der vorhergehenden Ansprüche, wobei i.) eine Grammatur von 25 bis 50 g /qm, insbesondere 30 bis 40 g /qm aufweist und/oder eine Dicke von 25 - 75 µm aufweist.

7. Lidfolie für Getränkekapseln nach einem der vorhergehenden Ansprüche, wobei gemäß Schicht iii.) das Metall ausgewählt ist aus Bor, Aluminium oder Silizium, insbesondere Boroxid, Aluminiumoxid oder Siliziumoxid.

8. Lidfolie für Getränkekapseln nach einem der vorhergehenden Ansprüche, wobei Schicht iii.) eine Dicke von 20 - 50 nm aufweist.

9. Lidfolie für Getränkekapseln nach einem der vorhergehenden Ansprüche, wobei iii.) zusätzlich ein Coating, insbesondere aus Acrylat enthält.

10. Lidfolie für Getränkekapseln nach Anspruch 9, wobei mindestens ein Acrylat ausgewählt ist aus der Gruppe Polyurethan-, Polyester-, Epoxy- und Polyether-acrylate oder -methaacrylate, insbesondere Oligomere, und / oder Monomere ausgewählt aus der Gruppe mono-, di-, tri-, tetra- und hexafunktionelle Acrylate oder Methaacrylate.

11. Lidfolie für Getränkekapseln nach einem der Ansprüche 9 oder 10, wobei das Coating aus Acrylat eine Dicke von 20 - 40 nm aufweist.

12. Lidfolie für Getränkekapseln nach einem der Ansprüche 1 bis 8 und 9 oder 10, wobei die Schicht der Metallisierung iii.) ein Gewicht von 0,1 bis 0,15 g/qm aufweist und/oder das Acrylat ein Gewicht von 0,04 bis 0,06 g/qm aufweist.

13. Lidfolie für Getränkekapseln nach einem der Ansprüche 1 bis 13, wobei die Schicht ii.) ein maximales Elastizitätsmodul von 100 bis 300 MPa gemäß ISO 527 aufweist und/oder die maximale Streckspannung oder Zugspannung 45 MPa, insbesondere 35 bis 40 MPa gemäß ISO 527 beträgt und / oder die MVR (190 Grad Celsius / 5 kg) von 8-12 cm³/10 min gemäß ISO 1133 beträgt.

14. Lidfolie für Getränkekapseln nach einem der Ansprüche 1 bis 13, wobei die Siegelschicht iv.) ein maximales Elastizitätsmodul bis 4500 MPa gemäß ISO 527 aufweist, und / oder die maximale Streckspannung oder Zugspannung 40 - 60 MPa, und / oder die MVR (190 Grad Celsius / 2,16 kg) von 3-5 cm³/10 min gemäß ISO 1133 beträgt.
